# EUROPEAN PATENT SPECIFICATION

(11) **EP 1 785 448 B1**
(45) Date of publication and mention of the grant of the patent: **02.03.2011**
(21) Application number: 05782124.1
(22) Date of filing: 31.08.2005
(51) Int. Cl.: C08J 5/18, B29C 41/12, B32B 9/00, B82B 3/00, C08L 89/00, B01D 69/12, B29C 41/14

(54) **THIN-FILMY POLYMERIC STRUCTURE AND METHOD OF PREPARING THE SAME**
DÜNNSCHICHTIGE POLYMERSTRUKTUR UND VERFAHREN ZU IHRER HERSTELLUNG
STRUCTURE POLYMÈRE PELLICULAIRE FINE ET MÉTHODE DE SYNTHÈSE DE LADITE STRUCTURE

(30) Priority: 31.08.2004 JP 2004252207
(43) Date of publication of application: 16.05.2007
(73) Proprietor: Takeoka, Shinji, Tokyo 158-0094 (JP)
(72) Inventor: TAKEOKA, Shinji, 1580094 (JP); OKAMURA, Yosuke, 1770044 (JP); OHTSUKA, Masanori, 1740076 (JP)
(74) Representative: Denison, Christopher Marcus
(86) International application number: PCT/JP2005/016371
(87) International publication number: WO 2006/025592

(56) References cited:
- EP-A2- 0 344 799
- WO-A-02/076428
- WO-A-2004/058308
- WO-A-2006/004537
- WO-A1-03/103854
- JP-A- 2003 528 755
- JP-A- 2003 535 063
- US-A- 4 987 032
- US-A- 6 020 175
- US-A- 6 114 099
- US-A1- 2004 071 909
- DATABASE WPI Week 199220 Derwent Publications Ltd., London, GB; AN 1992-162165 XP002443631 & JP 04 090307 A (NITTO DENKO CORP) 24 March 1992 (1992-03-24)
- DATABASE WPI Week 200038 Derwent Publications Ltd., London, GB; AN 2000-434049 XP002443632 & JP 2000 143705 A (DOKURITSU GYOSEI HOJIN KAGAKU GIJUTSU SH) 26 May 2000 (2000-05-26)
- GITTINS D.I., CARUSO F.: "Tayloring the polyelectrolyte coating of Metal nanoparticles" JOURNAL OF PHYSICAL CHEMISTRY, vol. 105, 2001, pages 6846-6852, XP002443635
- MARIKANOS S.M., NOVAK J.P., BROUSSEAU L.C.III, HOUSE A.B., EDEKI E.M., FELDHAUS J.C., FELDHEIM D.L.: "Gold particles as templates for the synthesis of hollwo polymer capsules . Control of capsule dimensions and guest encapsulation scheme 1" JOURNAL OF THE AMERICAN CHEMICAL SOCIETY, vol. 121, no. 37, 1999, pages 8518-8522, XP002443636
- WU M., O'NEILL S.A., BROUSSEAU L.C., MCCONNELL W.P., SHULTZ D.A., LINDERMAN R.J., FELDHEIM D.L.: "Synthesis of nanometer-sized hollow polymer capsules from alkanethiol-coated gold particles" CHEMICAL COMMUNICATIONS, 2000, pages 775-776, XP002443637

## Description

### TECHNICAL FIELD

The present invention relates to a method for preparing a thin film polymer structure of an arbitrary shape.

### BACKGROUND ART

As methods for creating organic molecular thin films, a spin coating method, an electrolytic polymerization method, a vapor deposition method, a vapor deposition polymerization method and the like are conventionally used. As a method for forming an alignment layer, the Langmuir-Blodgett (LB) method is well known. This method is performed as follows. Amphiphilic molecules are dissolved in a volatile organic solvent to be developed on a gas-liquid interface. After the solvent is vaporized, the resultant substance is compressed. The resultant monomolecular layer is transferred to a solid substrate. With this method, the number of the thin films and the order of lamination can be controlled. However, this method is only applicable to molecules which can be developed on a water surface as a monomolecular layer and thus is only effective for amphiphilic molecules, which are water-insoluble. The LB method is not efficient because the equipment to be used is expensive and cannot be easily handled.

A technology has been established for forming a self-assembled monolayer (SAM) including organic molecules regularly and stably aligned on a surface of a metal material such as gold or platinum, or a surface of an inorganic material such as silicon, silica or glass. This technology has features that the monolayer is strongly bonded to the substrate and so is stable, and the monolayer can be formed at low cost and in a simple manner without using any special equipment by merely sinking the substrate in a solution. In addition, this technology is applicable to a substrate having a complicated shape. This technology is a target of attention as, for example, a nanotechnology for constructing a pattern of organic molecules on an ultrafine pattern written by a lithography technology (Daan, W et al., Angew, Chem. Int. Ed., 43, 2480-2495 (2004)).

An attempt now has been started to construct a three-dimensional structure in a bottom-up manner by laminating molecules on a two-dimensional plane by, for example, an alternate lamination method using electrostatic interaction of polyelectrolytes. This lamination method is based on the following principle. A substrate surface is immersed in a polyelectrolyte solution having the opposite charge to that of the substrate surface, so that one layer of the polyelectrolyte adsorbs to the substrate surface by electrostatic interaction. At this point, the substrate surface is newly charged oppositely by the excessive charges of the adsorbing polyelectrolyte. Next, one layer of the polyelectrolyte having the opposite charge to that of the polyelectrolyte layer already adsorbing is caused to adsorb to the surface. By repeating this process, a multi-layer structure controlled to have an arbitrary thickness can be formed. For example, it has been reported that an enzyme is immobilized, by electrostatic interaction, on a structure obtained by the alternate lamination method, for the purpose of developing new molecular devices including enzyme reactors, biosensors and light emitting devices (Japanese Patents Nos. 3020428 and 2966795). This method allows a three-dimensional structure to be prepared in a simple manner without using any special equipment and so is suitable to immobilize molecules of proteins or the like which may be denatured.

However, the above-described structures are necessarily formed on a substrate, and the above-described methods are for constructing a functional thin film including the substrate. No attempt has been made to use the structure exfoliated from the substrate.

It is known to form a complex of a polyelectrolyte on a surface of a mold formed of an inorganic or metal microparticle or cell and then dissolve the mold, so that a hollow structure having a hollow of the shape of the mold is formed (David, I. et al., J. Phys. Chem. B, 105, 6846-6852 (2001)). As the microparticle forming the mold, silica, latex bead, melamine resin or the like is used. The mold is dissolved by HF (hydrogen fluoride), an organic solvent, an acid or the like. There is no problem where a spherical microparticle is used as a mold, but a mold having a complicated shape is highly precise and thus is expensive like a plate for printing or a plastic mold. Therefore, this method is usable only when the mold is stable and reusable. Since the above-described structures are formed in a bottom-up manner, the surface of such a structure in contact with the substrate is not modified even after the structure is freed from the substrate.

There is a polymerization method by which a polymerizable group is introduced into amphiphilic molecules to disperse molecular assemblies formed of such molecules, for example, micelles, vesicles, ribbons, tubes, discs, or sheets in water, and the molecular assemblies are polymerized. With this method, it is troublesome to synthesize the amphiphilic molecules, and it is difficult to control the structure of the assemblies, because the structure of the assemblies is determined by the structure of the amphiphilic molecules.

### DISCLOSURE OF THE INVENTION

The present invention has an object of providing a thin film polymer structure of an arbitrary shape and a method for preparing the same.

As a result of active studies conducted in order to solve the above-described problems, the present inventor found that a thin film polymer structure is obtained by forming a self-assembled monolayer on, for example, a circular gold substrate body, then causing albumin as polyfunctional molecules to adsorb thereto and crosslinking albumin, and then exfoliating a circular albumin polymer thin film from the gold substrate body. Thus, the present invention has been completed. The present inventor also found the following. Before exfoliating the thin film polymer structure from the gold substrate body, a recognition protein is bonded to the surface of the structure. Then, the structure is exfoliated. When the thin film structure is caused to act on a substrate body having molecules recognized by the recognition protein solidified on the surface thereof, the structure is placed upside down and attached to the molecules. When another modifier, for example, a linear polymer is bonded to a surface which is now the upper surface of the structure and then the structure is exfoliated from the substrate body, the thin film structure has different states on the two surfaces thereof Namely, the present invention is directed to the following.
(1) A thin film polymer structure comprising a functional substance on one surface of the film, the thin film polymer structure being obtained by the steps of:
   (a) causing polyfunctional molecules to adsorb to an area of an arbitrary shape in an interface between a substrate body and a liquid phase;
   (b) polymerizing and/or crosslinking the adsorbing polyfunctional molecules to form a polymer thin film; and
   (c) bonding a functional substance to the formed thin film and then exfoliating the thin film from the substrate body.
(2) A thin film polymer structure comprising a functional substance on one surface of the film, the thin film polymer structure being obtained by the steps of:
   (a) bonding polyfunctional molecules to which the functional substance in bonded to an area of an arbitrary shape in an interface between a substrate body and a liquid phase, the area including a substance recognizing the functional substance;
   (b) polymerizing and/or crosslinking the bonded polyfunctional molecules to form a polymer thin film; and
   (c) exfoliating the formed thin film from the substrate body.
(3) A thin film polymer structure comprising a functional substance on one surface of the film and comprising arbitrary modification on the other surface of the film, the thin film polymer structure being obtained by the steps of:
   (a) bonding the functional substance on the one surface of the thin film polymer structure according to (1) or (2) above to a substance solidified on a substrate body and recognizing the functional substance;
   (b) providing the arbitrary modification on the other surface of the structure; and
   (c) exfoliating the modified thin film from the substrate body.
(4) A dispersion comprising the above-described structure dispersed in a liquid.
(5) A method for preparing a thin film polymer structure, comprising the steps of:
   (a) causing polyfunctional molecules to adsorb to an area of an arbitrary shape in an interface between a substrate body and a liquid phase;
   (b) polymerizing and/or crosslinking the adsorbing polyfunctional molecules to form a polymer thin film; and
   (c) exfoliating the formed thin film from the substrate body.
(6) A method for preparing a thin film polymer structure comprising a functional substance on one surface of the film, the method comprising the steps of:
   (a) causing polyfunctional molecules to adsorb to an area of an arbitrary shape in an interface between a substrate body and a liquid phase;
   (b) polymerizing and/or crosslinking the adsorbing polyfunctional molecules to form a polymer thin film; and
   (c) bonding a functional substance to the formed thin film and then exfoliating the thin film from the substrate body.
(7) A method for preparing a thin film polymer structure comprising a functional substance on one surface of the film, the method comprising the steps of:
   (a) bonding polyfunctional molecules comprising the functional substance to adsorb to an area of an arbitrary shape in an interface between a substrate body and a liquid phase, the area including a substance recognizing the functional substance;
   (b) polymerizing and/or crosslinking the bonded polyfunctional molecules to form a polymer thin film; and
   (c) exfoliating the formed thin film from the substrate body.
(8) A method for preparing a thin film polymer structure comprising a functional substance on one surface of the film and comprising arbitrary modification on the other surface of the film, the method comprising the steps of
   (a) bonding the functional substance on the one surface of the thin film polymer structure according to (5) or (7) above to a substance which is solidified on an area of an arbitrary shape in an interface between a substrate body and a liquid phase and which recognizes the functional substance;
   (b) providing the arbitrary modification on the other surface of the structure; and
   (c) exfoliating the modified thin film from the substrate body.

According to the present invention, the step of polymerizing and/or crosslinking the polyfunctional molecules may further comprise the step of laminating polyelectrolytes having opposite charges to each other alternately to crosslink the polyelectrolytes in terms of charges. The polyfunctional molecules may be of a polyfunctional monomer and/or a polyfunctional macromer. The polyfunctional macromer is, for example, a protein, a polyelectrolyte, or a polymer bead. According to the present invention, the polyfunctional macromers are crosslinked by, for example, physical crosslinking such as thermal denaturing or thermal plasticization, or by fusion.

According to the present invention, the modification may be provided by a polymer compound such as poly(ethyleneglycol), a protein, a peptide, a sugar chain and/or biotin derivative.

Also according to the present invention, the area has a structure of a self-assembled monolayer or a self-assembled bilayer. The self-assembled monolayer may be formed of linear hydrophobic molecules comprising, at a terminus, an SH group, a chloroalkylsilyl group, an alkoxyalkylsilyl group, or a vinyl group. The self-assembled bilayer may comprise at least one selected from the group consisting of phospholipid, amino acid-based lipid, sugar lipid, and cationic lipid. The area is preferably modified with a temperature-responsive polymer and the exfoliation is preferably caused by a temperature decrease.

According to the present invention, the substrate body is entirely or partially formed of a metal or an oxide cover layer thereof, silicon, silica, glass, mica, a carbon material such as graphite, or a calcium compound such as apatite.

According to the present invention, the exfoliation may be caused by treatment with a surfactant or an organic solvent, or by addition of an aqueous solution comprising a compound which is competitive against the functional substance.

### BRIEF DESCRIPTION OF THE DRAWINGS

FIG. 1 is a conceptual view showing production of a thin film polymer structure according to the present invention.
FIG. 2 shows an outline of preparation of an albumin nanosheet.
FIG. 3 shows measurement results of the contact angle at each of steps of preparation of the albumin nanosheet.
FIG 4 shows a change in the number of oscillations by a quartz oscillator microbalance method.
FIG 5 provides microphotographs showing observation results of the albumin nanosheet with a fluorescent microscope.
FIG 6 shows an outline of preparation of an ODMS-SiO₂ substrate and adsorption or exfoliation of rHSA.
FIG 7 shows the observation results of rHSA adsorbing to the ODMS-SiO₂ substrate provided by a fluorescent microscope.
FIG 8 shows an outline of production of an rHSA sheet on the ODMS-SiO₂ substrate.
FIG. 9(a) shows observation results of rHSA-SH or rHSA before and after C₁₂E₁₀ is added to the ODMS-SiO₂ substrate provided by a fluorescent microscope; and FIG 9(b) shows an observation result of the rHSA sheet on a cover glass plate.
FIG 10 shows SEM images of (rHSA)LB on the ODMS substrate body ((a): × 300, (b): × 200)
FIG. 11 shows SEM images of an (rHSA)LB sheet formed by fusion on the ODMS substrate body.

### BEST MODE FOR CARRYING OUT THE INVENTION

Hereinafter, embodiments of the present invention will be described. The following embodiments are given in order to illustrate the present invention and are not intended to limit the present invention in any way. The present invention can be carried out in various embodiments without departing from the scope thereof.

Hereinafter, a method for preparing a thin film polymer structure according to the present invention (hereinafter, referred to also as a "sheet") will be described.

### 1. Preparation of a thin film polymer structure

The method according to the present invention is characterized in that polyfunctional molecules are caused to adsorb to an area of an arbitrary shape in an interface between a substrate body (hereinafter, referred to also as the "substrate") and a liquid phase, then the polyfunctional molecules are polymerized and/or crosslinked to form a thin film, and the thin film is exfoliated from the substrate body. The method according to the present invention has enabled the thin film to be exfoliated from the substrate body (or a solid carrier) easily for the first time.

The method prepares a thin film polymer structure. The thin film polymer structure according to the present invention is a single-layer thin film or a multi-layer thin film in which polyfunctional molecules are polymerized and/or crosslinked. The thin film polymer structure according to the present invention may have a functional substance on one surface of the film, or may have a functional substance on one surface of the film and having arbitrary modification on the other surface of the film.

The structure may be obtained as a thin film dispersion of polymer. A dispersion having the thin film polymer structures according to the present invention dispersed in a liquid is encompassed in the scope of the present invention.

### (1) Area of an arbitrary shape in an interface between the substrate body and a water surface

In the present invention, the term "interface between the substrate body and a liquid phase" refers to an interface at which the solid substrate body is in contact with a liquid such as water, an aqueous solution, or an organic solvent.

The shape of the area to which polyfunctional molecules are to adsorb may have an arbitrary shape with no specific limitation. The area may be, for example, circular, rectangular, elliptical, ribbon-shaped, cord-shaped, branched at a plurality of points, or star-shaped.

According to the present invention, it is preferable to form a self-assembled monolayer (SAM) or a self-assembled bilayer (SAB) at the interface between the substrate body and the liquid phase. According to the present invention, the interface is preferably modified with a temperature-responsive polymer. Hereinafter, a substrate body treated as above will be referred to also as a surface-treated substrate body, a SAM-formed substrate body, a SAB-formed substrate body, or a temperature-responsive polymer layer-formed substrate body.

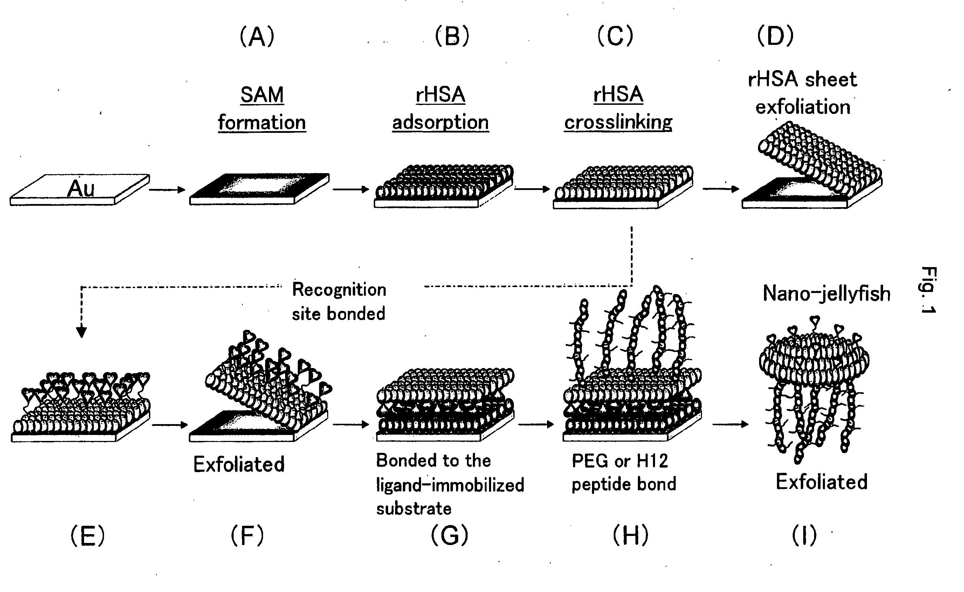

The term "self-assembled monolayer (SAM)" refers to a layer formed of linear hydrophobic molecules having, at a terminus, a functional group which can be bonded to the substrate body. The self-assembled monolayer (SAM) is immobilized on a surface of a metal substrate body by the functional group to form a film (FIG 1A). The term "self-assembled bilayer (SAB)" refers to a bilayer constructed of amphiphilic molecules containing a hydrophobic hydrocarbon chain such as, for example, a lipid, and a hydrophilic polar head group. The self-assembled bilayer (SAB) is formed by self-assembly in a hydrophilic area of the substrate body surface or in an area of the substrate body surface which has the opposite charge to that of the polar head group of the amphiphilic molecules. In the case where a bilayer is formed by self-assembly of amphiphilic molecules in a hydrophobic area formed of a SAM and the surface of the bilayer is made hydrophilic, such a bilayer may be regarded as a SAB.

Herein, the term "self assembled layer" refers to a layer spontaneously formed.

According to the present invention, the substrate body may be anything which allows polyfunctional molecules to adsorb thereto with no specific limitation. In the case where a SAM or SAB is formed on a substrate body, the substrate body may be anything which allows the SAM or SAB to be formed thereon with no specific limitation. In the case where a substrate body is modified with a temperature-responsive polymer, the substrate body may be anything which can be thus modified with no specific limitation. The substrate body may be, for example, a metal plate formed of gold, silver, platinum, copper, iron, aluminum, titanium, zinc or the like, or a flat plate having such a metal material vapor-deposited thereon. The substrate body may be entirely or partially formed of a metal material described above or an oxide cover layer thereof, silicon, silicon oxide (SiO₂), silica, glass, mica, a carbon material such as graphite, or a calcium compound such as apatite.

According to the present invention, a hydrophobic part of the hydrophobic molecules forming the SAM may be formed of linear hydrophobic molecules having, at a terminus, an SH group, a chloroalkylsilyl group, an alkoxyalkylsilyl group, a vinyl group, an amino group, a carbonyl group or the like. Usually, the hydrophobic part is formed of a saturated hydrocarbon chain having a carbon number of 4 to 40, preferably of 8 to 18. A linear hydrophobic molecule having an SH group is, for example, alkanethiol. Examples of alkanethiol include undecanethiol, dodecanethiol, and tetradecanethiol. The hydrophobic molecule may have alkene or alkyne containing an unsaturated bond, an isoprenoid backbone having a branching structure, or a steroid cycle.

When a gold substrate body is used, a SAM can be spontaneously formed by dissolving the above-described hydrophobic molecules having an SH group in a solvent such as ethanol, and putting the gold substrate body into contact with, or immersing the gold substrate body in, the resultant solution. When a silicon substrate body is used, a SAM is obtained by long-chain molecules having a vinyl group. When a silica or metal substrate body is used, a SAM is obtained by long-chain molecules having a chloroalkylsilyl group or an alkoxyalkylsilyl group. Examples of the long-chain hydrophobic molecule having such a group include octadecyldimethylchlolosilane, trialkoxyhexadecylsilane, and octadecyltrimethoxysilane (ODMS). For example, a SAM is obtained by vapor-depositing ODMS on a silicon oxide substrate body. The term "vapor deposition" refers to heating and vaporizing a substance in a vacuum condition or a condition close to vacuum, so that a thin film of the substance is formed on the surface of a substrate body.

According to the present invention, the amphiphilic molecules forming the SAM may be any type of molecules which include a hydrophobic part and a hydrophilic polar part therein. Examples of the amphiphilic molecule usable to form the SAM include lipids such as hydrophobic phospholipid, amino acid-based lipid, and sugar lipid, and cationic lipids such as dialkylammonium salt.

A SAB is formed as follows. A layer having a bilayer structure can be easily formed by applying an organic solvent, obtained by dissolving amphiphilic molecules such as lipid molecules, to a substrate. After that, a certain area is masked, and electron beam radiation or the like is performed to decompose and thus remove the bilayer structure of the non-masked area. Thus, an area having the bilayer structure is formed.

Alternatively, a SAB can be spontaneously formed as follows. A substrate body including an anionic area or a cationic area as a result of surface treatment is put into contact with, or immersed in, a dispersion of cationic lipid or anionic lipid. The SAB is formed in the area.

A SAB can also be spontaneously formed as follows. A substrate body including an area having a SAM formed thereon is put into contact with, or immersed in, a solution or a dispersion of amphiphilic molecules.

According to the present invention, the substrate body may be modified with a temperature-responsive polymer. The temperature-responsive polymer may be a polymer which is put into a gel state at a phase transition temperature or higher by hydrophobic interaction as a result of the polymer chain being contracted, and which is put into a fluid state at the phase transition temperature or lower as a result of the polymer chain being expanded. Examples of the usable temperature-responsive polymer include poly(N-isopropylacrylamide) (PIPAAm) and copolymers thereof. In the case of PIPAAm, at the phase transition temperature or higher, the interface between the substrate body and the water phase of the temperature-responsive polymer modifying the substrate body is hydrophobic, whereas at the phase transition temperature or lower, such an interface is hydrophilic.

The temperature-responsive polymer may be caused to modify, or adsorb to, the substrate body by merely applying PIPAAm to the substrate body and drying the PIPAAm, or by applying PIPAAm to a polyethylene substrate body and then grafting the PIPAAm by polymerization through light radiation.

Such a polymer can be caused to adsorb to, or chemically modify, an arbitrary area of the substrate body using the masking technology described later.

According to the present invention, an area of a surface-treated substrate body, namely, an area of a SAM-formed substrate body, an area of a SAB-formed substrate body or an area of a temperature-responsive polymer-formed substrate body may be formed to have an arbitrary shape using masking. A photomasking method will be described below, but a person of ordinary skill in the art can select appropriate elements for masking. The method is not limited to the method described below.

First, a resist is formed on a surface-treated substrate body. For example, a positive photoresist may be applied to the surface-treated substrate body by a spin coater at 800 rpm for 3 seconds and then at 7000 rpm for 20 seconds, and heated, for example, at 110°C for 90 seconds to be dried. The thickness of the photoresist is decreased by increasing the rotation rate and the rotation time. The heating temperature and the heating time are not limited to the above and may be appropriately altered as long as the solvent of the resist is vaporized. Next, a photomask is formed on the resist, and the resist is exposed to light. The resist may be exposed to light by radiating an electron beam, an ultraviolet ray, an X-ray or the like for 1 to 60 seconds, preferably for 5 to 20 seconds. The photomask may be, for example, a rectangular mask having a size of 10 µm × 30 µm or a circular mask having a diameter of 3 µm. Next, the exposed area of the resist on the substrate body is developed and dried, whereas the non-exposed area of the resist is removed. Then, an area of the SAM, SAB or temperature-responsive polymer layer which is not protected by the resist is removed by O₂ plasma treatment, CO plasma treatment, or reactive ion etching using halogen gas. Finally, the resist is removed by a resist-soluble solvent such as acetone, THF, or dichloromethane. Thus, an area of a desirable shape (for example, having a micropattern) which has a layer structure or which is modified with a temperature-responsive polymer can be formed.

### (2) Adsorption, polymerization and crosslinking of polyfunctional molecules

Examples of the substance to adsorb to an area (for example, an area having a SAM or SAB structure) in an interface between the substrate body and the liquid phase, i.e., the substance included in the thin film, include polyfunctional molecules such as polyfunctional monomers and polyfunctional macromers.

A polyfunctional monomer or macromer includes two or more homogeneous or heterogeneous functional groups in one molecule. Examples of the polyfunctional monomer include monomers containing a plurality of amino groups such as amino acids and sugars, carboxyl groups, hydroxyl groups, mercapto groups, isocyanate groups, aldehyde groups, epoxy groups, cyanuric group and the like; and monomers containing a plurality of vinyl groups such as divinylbenzene, divinylether, divinylsulfone, bismaleimide and the like. Examples of the polyfunctional macromer include proteins, polylysine, polyglutamic acid, substances obtained by hydrolysis of polystyrene/maleic acid anhydride copolymers, kitosan, alginic acid, and polymer beads.

A mono-functional monomer or macromer may be used in mixture with a polyfunctional monomer or macromer. For example, polyfunctional molecules (albumin or the like) may be caused to adsorb to, or to chemically modify, a surface of beads formed of a polymer such as polystyrene or poly(ε-caprolactone), or an L-lactic acid/glycolic acid copolymer.

Any protein is usable. Examples of the water-soluble protein include albumins such as BSA (bovine serum albumin) and HSA (human serum albumin), hemoglobin, myoglobin, soluble collagen, and fibrinogen. Proteins which are not originally water-soluble but are soluble in an aqueous solution containing an organic solvent or a surfactant are usable. A protein obtained by purifying a living body-derived sample by a known method, or a peptide synthesized by a peptide synthesizer, may be used. Alternatively, a recombinant protein produced in a host such as a mammal cell, an *Escherichia coli,* or a yeast by a known method using base sequence information of genes coding a target protein, and then purified is usable. A substance obtained by bonding, for example, a pyridyl disulfide group, a maleimide group, or a succinimide group to a functional group of a protein such as an amino acid, a carboxyl group, or a hydroxyl group via a spacer of an appropriate length is usable. A protein may be used in the form of latex beads covered with the protein (see Examples 10 through 12).

The term "polymer beads" refers to particles obtained in the following various manners. A monomer having a vinyl group is treated with emulsifying polymerization or suspending polymerization. O/W emulsion is used. A ring-shaped compound is treated with ring-opening polymerization as a monomer, and the resultant polymer is emulsified with a surfactant. Or, a polyfunctional macromer is polymerized. Examples of the polymer beads include latex beads formed of polystyrene-co-divinylbenzene or the like. The polymer beads may be biodegradable beads.

The polyfunctional molecule (for example, the polyfunctional monomer or macromer) may be amphiphilic. Examples of the amphiphilic molecule include polymerizable phospholipid having a diene group or a vinyl group at 1-acyl chain and 2-acyl chain, amino acid-based lipid, and sugar lipids.

The thin film (thin film polymer) may be formed of one type of molecules or a combination of a plurality of types of molecules. The combination may be a combination of a plurality of polyfunctional monomers, a combination of a plurality of polyfunctional macromers, or a combination of a polyfunctional monomer and a polyfunctional macromer. For example, polymer beads covered with a protein may be used as polyfunctional molecules.

A polyfunctional polymer adsorbs to a SAM, SAB or temperature-responsive polymer layer on a surface-treated substrate body to form a polymer thin film. Therefore, the adsorbing molecules (for example, the molecules including a hydrophobic part and forming the thin film) are arranged with the hydrophobic part being aligned along the SAM or the like. After the polyfunctional molecules adsorb (FIG. 1B), polymerization and/or crosslinking is performed as necessary to form a polymer thin film on the surface-treated substrate body (for example, on the SAM) (FIG. 1C).

In order to cause the polyfunctional molecules to adsorb to a SAM, the SAM-formed substrate body may be put into contact with, or immersed in, a solution or a dispersion of the polyfunctional molecules. Thus, a thin film of the polyfunctional molecules can be formed. In order to cause the polyfunctional molecules to adsorb to a SAB to form a thin film, a polyelectrolyte having the opposite charge to that of the surface of the SAB may be caused to adsorb to the SAB. In order to cause the polyfunctional molecules to adsorb to a temperature-responsive polymer area also, the area may be put into contact with, or immersed in, a solution or a dispersion of the polyfunctional molecules. Thus, a polymer thin film can be formed. The temperature-responsive polymer at the time of adsorption is preferably in a gel state. The temperature at the time of adsorption is preferably higher than the phase transition temperature of the temperature-responsive polymer.

According to the present invention, the polyfunctional molecules can be caused to adsorb to the SAM, SAB or temperature-responsive polymer layer by repeating an operation of deriving the SAM, SAB or temperature-responsive polymer layer from the solution of the polyfunctional molecules at an appropriate speed. In this case, the contact is realized using the surface tension on a gas-liquid interface. Therefore, the polyfunctional molecules can be occasionally caused to adsorb to the layer more selectively than in the liquid.

In the present invention, the term "polymerization" refers to a reaction of producing a polymer.

The molecules may be polymerized by polycondensation, poly-addition, addition-condensation, ring-opening polymerization, addition polymerization (radical polymerization, anionic polymerization, cationic polymerization), solid phase polymerization by heat, photopolymerization, radio polymerization, plasma polymerization or the like.

In the present invention, the term "crosslink" refers to forming a chemical bond between some specific atoms in the linear polymer. Crosslinking forms a three-dimensional net structure.

The molecules may be crosslinked by urethane bond or urea bond by an isocyanate group, formation of a Schiff base by an aldehyde group, disulfide bond by a mercapto group or the like. Examples of the crosslinker include alkyldiimidates, acyldiazides, diisocyanates, bismaleimides, triazinyls, diazo compounds, glutaraldehyde, N-succinimidyl-3-(2-pyridyldithio) alkyonate, and bromocyan.

The crosslinking between polyfunctional macromers may be physical crosslinking such as coagulation by thermal denaturing when the macromers are proteins. When the macromers are thermoplastic polymer beads, the surface of the beads may be partially fused by heating to realize physical crosslinking. Alternatively, the polymer beads may be completely fused by heating to form a thin film having an arbitrary shape. The treating conditions of a protein may be appropriately set in accordance with the properties of the protein. For example, albumin can be thermally denatured to realize crosslinking by being treated at 60 to 120°C, preferably at 70 to 100°C, for 1 to 60 minutes, preferably for 10 to 30 minutes. Polymer beads, for example, latex beads formed of, for example, polystyrene-co-divinylbenzene can be partially fused to realize crosslinking by being treated at 100 to 150°C, preferably at 110 to 120°C, for 1 second to 5 minutes, preferably for 10 to 60 seconds. Alternatively, the polymer beads can be completely fused to realize crosslinking by being heat-treated at 100 to 150°C, preferably at 110 to 120°C, for 30 to 60 minutes, preferably for 1 to 5 minutes. After the polymerization or crosslinking, the polyfunctional molecules may be further caused to adsorbed to, for example, the SAM- or SAB-formed substrate body on which the thin film is already formed. Polymerization or crosslinking may be repeated in this manner for further thin film formation.

According to the present invention, a polyelectrolyte may be used as a polyfunctional macromer included in the thin film. For example, a surface-treated substrate body such as a SAM or SAB is immersed in diluted solutions of polyelectrolytes (polycation and polyanion) having the opposite charges to each other alternately, so that the polyelectrolytes can spontaneously adsorb to the SAM or SAB. Thus, a thin film having polycation and polyanion alternately laminated therein is formed. Examples of the polycation include polymers of kitosan, polylysine, polyarginine, polyhistidine, ionen, poly(quaternized pyridine), diallyldialkylammonium salt. Examples of the polyanion include alginic acid, polyglutamic acid, polymethacrylic acid, polyacrylic acid, polystyrene sulfonic acid, alkaline metal salts thereof, and alkaline earth metal salts thereof A substance obtained by alkaline hydrolysis of a maleic acid anhydride/styrene alternate copolymer is also usable. The polycation and polyanion included in the laminated layers formed by the above-described alternate adsorption method are crosslinked in terms of charges by an electrostatic force, and thus a thin film is formed. Alternatively, an amino group and a carboxylic acid residue of polyion complexes may be subjected to dehydration-polymerization and thus crosslinked by an amide bond. Thus, a thin film is formed.

The thin films formed as described above are encompassed in the scope of the present invention.

The thin film formed at an interface between the substrate body and the liquid phase may be a single layer film or a multi-layer film.

According to the present invention, the substrate body may be washed before and after the adsorption and polymerization/crosslinking of the polyfunctional molecules. The substrate body may be washed by immersing the substrate body in, or putting the substrate body into contact with, a washing liquid once or a plurality of times.

### (3) Exfoliation of the thin film

The thin film polymer thus formed is exfoliated from the substrate body (when a SAM is formed, from the surface of the SAM) to obtain a thin film polymer structure (FIG 1D).

The thin film is exfoliated in the following various manners. The substrate body having the thin film formed thereon is put into contact with, or immersed in, a surfactant solution. The substrate body having the thin film formed thereon is immersed in a surfactant solution, and then an operation of shaking or vibrating the substrate body or an operation of deriving the SAM, SAB, temperature-responsive polymer layer or the like is repeated. The substrate body having the thin film formed thereon is put into contact with, or immersed in, an organic solvent. The substrate body having the thin film formed thereon is immersed in a surfactant solution, and then an operation of shaking or vibrating the substrate body or an operation of deriving the SAM, SAB, temperature-responsive polymer layer or the like is repeated. Any surfactant may be used with no specific limitation. Examples of the surfactant include nonionic surfactants such as C₁₂E₁₀(polyoxyethylene 10-lauryl ether), Tween20, or Triton-X; or ionic surfactants such as sodium cholate, sodium dodecyl sulfate, or sodium palmitate. Any organic solvent which can exfoliate the thin film can be used with no specific limitation. Example of the organic solvent include alcohols such as ethanol or methanol, THF, DMF, chloroform, dichloromethane, benzene, toluene, or ethyl acetate. The exfoliation is considered to occur between the SAM or SAB and the thin film. When the thin film structure formed on the surface of the SAB (for example, a multi-layer film formed by the alternate adsorption method of the polyelectrolytes) is exfoliated with an organic solvent, such exfoliation is caused by the entire SAB or the monomolecule layer in the bilayer structure being dissolved in the organic solvent. Accordingly, in the case of the SAM, the dispersion of the exfoliated structure does not include any element of the SAM, and the structure is formed of the polyfunctional components. By contrast, in the case of the SAB, the dispersion of the exfoliated structure includes elements of the SAB, and the structure can be purified by centrifugation, filtration, or ultrafiltration.

For exfoliating the thin film polymer structure formed on a gel-state temperature-responsive polymer modifying the surface of the substrate body, the substrate body may be put into contact with, or immersed in, an appropriate aqueous solution to lower the temperature to the phase transition temperature or lower, and then an operation of shaking or vibrating the substrate body, or deriving the temperature-responsive polymer layer may be repeated.

### 2. Thin film polymer structure having a functional substance on one surface thereof

According to the present invention, a functional substance may be bonded to a thin film obtained by polymerizing or crosslinking polyfunctional molecules (FIG. 1E) and then the thin film may be exfoliated from the substrate body (FIG 1F). Thus, a thin film polymer structure having a functional substance on one surface thereof can be produced.

The term "functional substance" refers to, for example, a substance having a molecule recognition ability such as a recognition protein or a ligand thereof, an antigen or an antibody existent on a cell membrane, a substance for promoting a specific reaction of a catalyst, an enzyme or the like, or a substance involved in a specific reaction of an anti-oxidant, a radical scavenger or the like.

A method for producing such a thin film polymer structure is as follows.

In a preferred embodiment of the present invention, first, polyfunctional molecules are caused to adsorb to an area of an arbitrary shape in an interface between the substrate body and a liquid phase, and then the adsorbing polyfunctional molecules (for example, polyelectrolyte) is polymerized or crosslinked to form a polymer thin film (FIG 1A through 1C). This is prepared in a similar manner to the above-described thin film polymer structure. Next, a functional substance is bonded to the formed thin film (FIG 1E), and then the thin film is exfoliated from the substrate body. Thus, the thin film polymer structure having a functional substance can be obtained (FIG. 1F). The exfoliation of the thin film from the substrate body may be performed in a similar manner to the "Exfoliation of the thin film" described above.

The functional substance may be bonded to the thin film via a functional group which can be bonded to a substance introduced into a polyfunctional monomer or macromer included in the thin film, i.e., an amino group, a carboxyl group, a hydroxyl group, a mercapto group, an isocyanate group, an aldehyde group, an epoxy group, a cyanuric group or a vinyl group. For example, the bonding reaction between the functional molecules and the thin film may be caused using urethane bond or urea bond by a reaction between a hydroxyl group or an amino group and an isocyanate group, using formation of a Schiff base by a reaction between an amino group and an aldehyde group, using disulfide bond by a reaction between mercapto groups, using a reaction between a mercapto group and a pyridyldisulfide group or a maleimide group, using a reaction between a carbonyl group and a succinimide group, or the like. Alternatively, a ligand may be introduced into the thin film or the functional substance, so that the functional substance can be immobilized on the thin film using a complex of the ligand and an acceptor introduced into the functional substance or the thin film. Examples of the specific combination include biotin and avidin, sugar chain and lectin, antigen and antibody, drug and receptor, and enzyme and substrate.

In another preferred embodiment of the present invention, a SAM, SAB temperature-responsive polymer layer or the like bonded to a substance which can recognize a functional substance (referred to as a "recognition substance") is formed on a surface of a substrate body (FIG. 1G). The term "recognition substance" refers to a substance forming a pair with the "functional substance" described above.

Separately from above, a functional substance is bonded to polyfunctional molecules (for example, polyelectrolyte), and the polyfunctional molecules are caused to adsorb to a SAM, SAB or temperature-responsive polymer layer. Thus, a complex is formed of a recognition substance bonded to the surface of the SAM, SAB or temperature-responsive polymer layer and a functional substance bonded to the polyfunctional molecules. The polyfunctional molecules are polymerized and/or crosslinked to form a thin film, and then the bond of the complex is removed to exfoliate the thin film from the substrate body (in this case, the recognition substance). Thus, the thin film polymer structure having a functional substance on one surface thereof can be produced.

For bonding the functional substance to the polyfunctional molecules, a method similar to the above-described method for bonding the functional substance to the thin film is usable. The recognition substance may be bonded to the SAM, SAB or temperature-responsive polymer layer by the following methods. (i) The recognition substance is covalently bonded in advance to a part of the molecules included in the SAM, SAB or temperature-responsive polymer layer, and the SAM, SAB or temperature-responsive polymer layer is formed. (ii) The recognition substance is chemically or physically bonded to a surface of the SAM, SAB or temperature-responsive polymer layer. The chemical bonding method uses similar means to that of the above-described method of bonding the functional substance to the thin film. The physical bonding method uses electrostatic interaction, hydrophobic interaction, hydrogen bonding, inter-molecular force or the like. The bonding density of the recognition substance to the SAM, SAB or temperature-responsive polymer layer is preferably controlled in accordance with the density of the functional substance of a target thin film molecular structure.

The thin film may be exfoliated by adding a substance competing against the functional substance or a substance competing against the recognition substance (for example, an aqueous solution containing a low molecular-weight compound). When, for example, GPIIbIIIa is used as the functional substance and dodecapeptide is used as the recognition substance, dodecapeptide may be caused to act as the low molecular-weight compound to separate the thin film from the substrate body. At this point, the recognition substance stays on the SAM, SAB or temperature-responsive polymer layer, and is not included in the separated thin film polymer structure.

Examples of the combination of the functional substance and the partner thereof (recognition substance) include biotin and avidin, sugar chain and lectin, antigen and antibody, drug and receptor, and enzyme and substrate. One of each pair can be bonded to the film.

Examples of the enzyme include catalase, horseradish peroxisidase, kimotripsin, cytochrome, α-amylase, β-amylase, galactosidase, glycocerebrosidase, blood coagulation factor, peroxisidase, protease, cellulase, hemicellulase, xylanase, lipase, pullulanase, isomerase, glycoamylase, glucose isomerase, glutamylase, β-glukanase, and serinprotease, but the usable enzyme is not limited thereto.

### 3. Thin film polymer structure having a modified surface

The present invention provides a method for preparing a thin film polymer structure having a modified surface by bonding a substance to one or both of the surfaces of the thin film.

According to the present invention, the thin film polymer structure having a modified surface is obtained by modifying the other surface of the structure having a functional substance on one surface thereof produced in section 2 above.

First, a thin film polymer structure having a functional substance on one surface thereof is immobilized on a surface of a substrate body having a recognition substance. The immobilization to the substrate body spontaneously occurs by putting the substrate body into contact with, immersing the substrate body in, or shaking the substrate body in, the dispersion of the substructure. Since the functional substance is bonded to the thin film, the thin film is placed upside down and is bonded to the recognition substance via the functional substance (FIG 1G).

Then, the surface of the thin film (the surface different from the surface having the functional substance bonded thereto) is modified with an appropriate modifying substance (FIG. 1H), and the thin film is exfoliated. Thus, the thin film having the functional substance on one surface thereof and having the modifying substance bonded to the other surface thereof is produced (FIG 1I).

The thin film may be exfoliated by adding a substance competing against the functional substance or a substance competing against the recognition substance (for example, an aqueous solution containing a low molecular-weight compound). When, for example, GPIIbIIIa is used as the functional substance and dodecapeptide is used as the recognition substance, dodecapeptide may be caused to act as the low molecular-weight compound to separate the thin film from the substrate body. At this point, the recognition substance stays on the SAM, SAB or temperature-responsive polymer layer, and is not included in the separated thin film polymer structure.

The thin film obtained by this method of the present invention, i.e., the polymer superthin film having a functional substance bonded to one surface thereof and having arbitrary modification on the other surface (referred to also as a "nano-jellyfish") is also encompassed in the scope of the present invention.

The partner of the functional substance included in the nano-jellyfish (recognition substance) may be a substance capable of specifically recognizing the functional substance as described above, for example, GPIbα, GPIaIIa, P-selectin or the like, but is not limited to these.

The modification made on the surface opposite to the surface having the functional substance bonded thereto is not limited to anything specific. For example, the modification may be provided by a polymer compound (for example, poly(ethyleneglycol) (PEG)), proteins, peptides, sugar chain and/or biotin derivatives, or the functional substance mentioned above.

Herein, the term "biotin derivative" refers to biotin having a functional group such as an amino group or a carboxyl group or an active ester group such as pyridyldisulfide group or a succinimidyl group bonded thereto.

In another embodiment of the present invention, the nano-jellyfish mentioned above may be used as a drug carrier (for example, a functional carrier or a platelet substitute in a drug delivery system). When the nano-jellyfish is used as a drug carrier, the modification may be provided by, for example, (a) drugs, (b) substances including a site specifically recognizing a target tissue/cell (specific recognition substances), or (c) substances for stabilizing the nano-jellyfish in the body. The specific examples of such a modifying substance are as follows:
(a) Drugs: anti-inflammatory drugs, hemostatic agents, vasodilating agents, thrombolytic agents, anti-arteriosclerosis agents, etc.
(b) Specific recognition substances: collagen, laminin, VCAM-1, selectin, fibrin, etc.
(c) Substances for stabilizing the nano-jellyfish: poly(ethyleneglycol), polyvinylpyrrolidone, polyvinylalcohol, polysaccharides, polyglutaminic acid, etc.

An arbitrary substance may be modified by, for example, providing urethane bond or urea bond between a hydroxyl group or an amino group of the arbitrary substance and an isocyanate group of the nano-jellyfish; activating a carboxyl group of the arbitrary substance and providing amide bond with an amino group of the nano-jellyfish; bonding an amino group of the arbitrary substance and an amino group of the nano-jellyfish by the Schiff base by glutaraldehyde; or providing amide bond or ester bond between a carboxyl group of the arbitrary substance and an amino group or a hydroxyl group of the nano-jellyfish. In the case where the arbitrary substance is a polysaccharide, an imidecarbonate may be formed by cyan bromide and then a hydroxyl group of the polysaccharide may be crosslinked with an amino group of the nano-jellyfish. Disulfide bond may be provided between a mercapto group of the arbitrary substance and an activated mercapto group of the nano-jellyfish. Alternatively, alkyldiimidates, acyldiazides, diisocyanates, bismaleimides, triazinyls, diazo compounds, glutaraldehyde, N-succinimidyl-3-(2-pyridyldithio) alkyonate, bromocyan or the like may be used as a crosslinker to realize crosslinking with a corresponding functional group. Still alternatively, when the arbitrary substance is hydrophobic, the arbitrary substance may be bonded to a hydrophobic area of the nano-jellyfish by hydrophobic interaction. When the arbitrary substance is hydrogen-bondable, the arbitrary substance may be bonded to a hydrogen-bondable area of the nano-jellyfish by hydrogen bond. When the arbitrary substance is charged, the arbitrary substance may be bonded to an area of the nano-jellyfish having the opposite charge by electrostatic interaction.

Hereinafter, the present invention will be described in more detail by way of specific examples, but the present invention is not limited to these specific examples.

### Example 1 Preparation of an albumin nanosheet

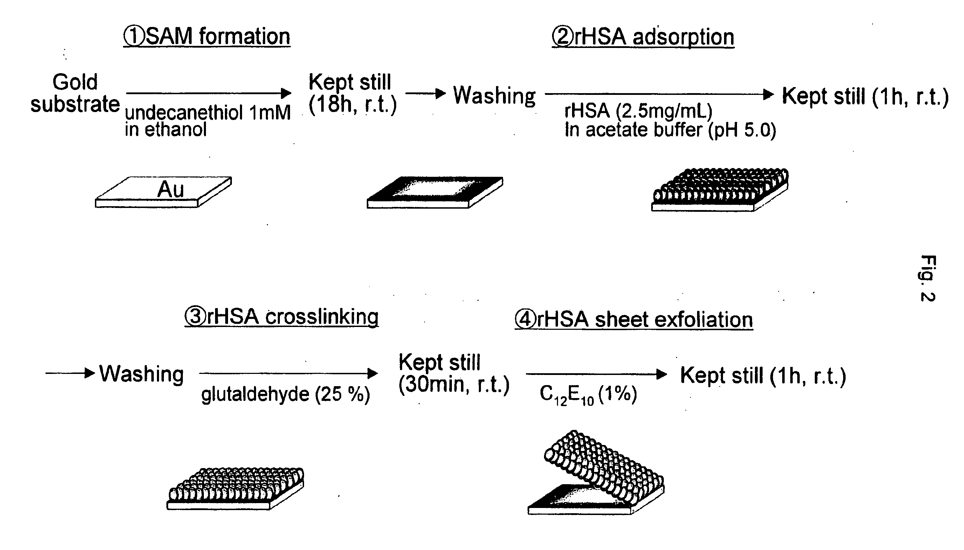

In this example, an albumin nanosheet was prepared in the following steps (FIG 2).

### (1) Formation of a SAM

A gold substrate was immersed in an ethanol solution of 1 mM undecanethiol and kept still at room temperature for 18 hours, thereby forming a SAM. Next, the SAM-formed gold substrate was washed.

### (2) rHSA (recombinant human serum albumin) adsorption

The washed SAM-formed gold substrate was immersed in an acetic acid buffer of 2.5 mg/mL rHSA (pH 5.0) and kept still at room temperature for 1 hour, thereby causing the rHSA to adsorb to the SAM. Next, the substrate was washed.

### (3) rHSA crosslinking

The washed substrate was immersed in a 25% (v/v) glutaldehyde and kept still at room temperature for 30 minutes, thereby crosslinking the rHSA.

### (4) rHSA sheet exfoliation

The substrate on which the rHSA was crosslinked was immersed in a 1% (v/v) polyoxyethylene 10-lauryl ether (C₁₂E₁₀) and kept still at room temperature for 1 hour, thereby exfoliating the rHSA sheet (hereinafter, referred to also as an "albumin nanosheet").

### Example 2 Measurement of a contact angle at each step of preparation of the albumin nanosheet

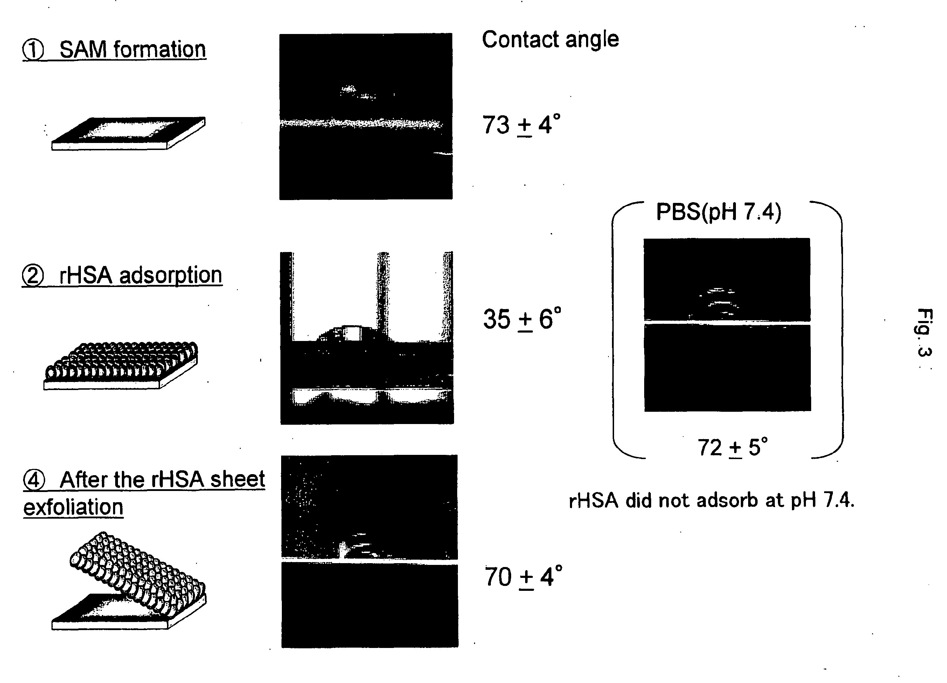

Regarding three samples obtained at each of the steps of preparation of the albumin nanosheet in Example 1, i.e., (a) after the SAM formation, (b) after the rHSA adsorption, (c) after the rHSA sheet exfoliation, the contact angle of water drops with respect to the substrate was measured. The results were (a) 73±4°, (b) 35±6°, and (c) 70±4°, respectively (FIG. 3). However, when the rHSA adsorption step (step (b)) was performed in a PBS (phosphate buffered saline) solution of rHSA (pH 7.4), the contact angle was 72±5° and the rHSA was not caused to adsorb.

Accordingly, it was confirmed that the rHSA was caused to adsorb in step (b) and was completely exfoliated in step (c).

### Example 3 Measurement of the adsorbing amount of rHSA using a quartz oscillator microbalance method

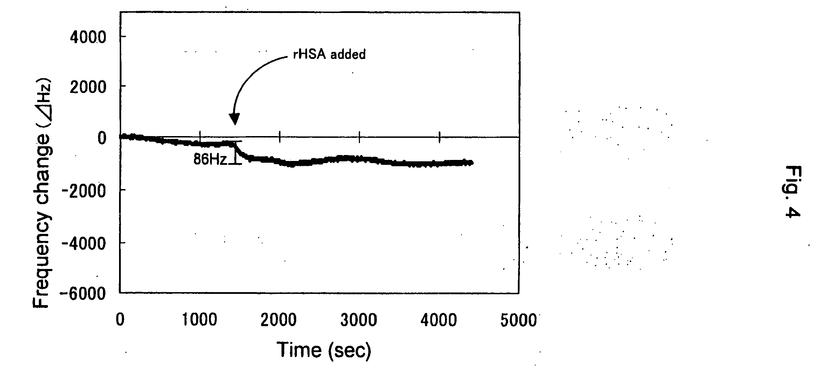

A gold-vapor deposited quartz oscillator was immersed in an ethanol solution of 1 mM undecanethiol, thereby forming a SAM on a surface of the gold. The washed oscillator was immersed in an aqueous solution of rHSA (pH 5.0 buffer solution), and a change in the number of oscillations (ΔHz) of the quarts oscillator was measured. FIG 4 shows a graph illustrating the result of the frequency change. It is clear from FIG 4 that the number of oscillations was changed by 86 Hz. Considering that a 1 Hz change of the number of oscillations corresponds to the adsorption of 0.86 ng of rHSA, it was calculated that 74 ng of rHSA adsorbed. Next, the number of molecules of rHSA which adsorbed was calculated. From the average surface area (31 nm²) of one molecule of rHSA, the ratio of the surface of the gold which was covered with rHSA was roughly calculated to be 83%.

### Example 4 Observation of the albumin nanosheet with a fluorescent microscope

This example has an object of checking whether the shape of albumin was changed or not by the exfoliation of the nanosheet using a surfactant. The shape of the albumin nanosheet on the gold substrate before the exfoliation, and the shape of the albumin nanosheet after the nanosheet was exfoliated from the gold substrate using a surfactant and put on a glass substrate, were observed with a fluorescent microscope.

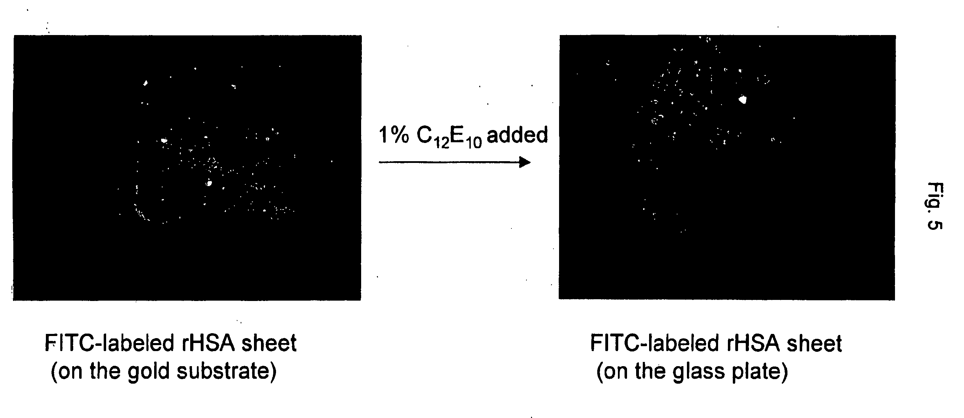

First, the rHSA of the albumin nanosheet on the gold substrate was fluorescently-labeled with FITC, and the rHSA molecules were observed with the fluorescent microscope. Then, 1% (v/v) C₁₂E₁₀ was added to exfoliate the sheet, and the rHSA molecules were observed on the glass substrate. It was found that the shape was not changed before and after the addition of the surfactant (FIG 5). The result indicates that the rHSA was two-dimensionally crosslinked.

### Example 5 Production of a hydrophilic micropatterned substrate

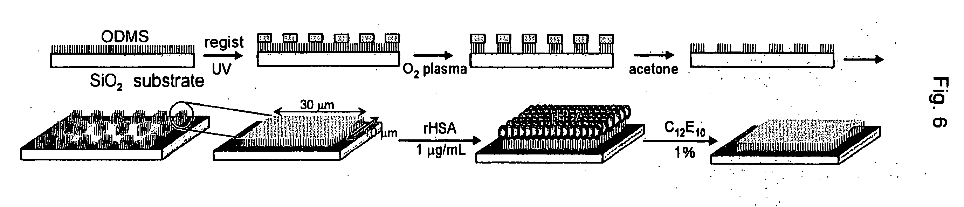

Octadecyltrimethoxysilane (ODMS) was vapor-deposited on a silicon oxide (SiO₂) substrate. Then, a positive photoresist was applied thereto by a spin coater (800 rpm, 3 s + 7000 rpm, 20 s), and was heated to be dried (100°C, 90 s). A photomask (rectangular, 10 µm × 30 µm) was formed on the resultant substrate, and the substrate was irradiated with UV (7 s). After development and drying, a resist pattern was obtained on the substrate. A part of the ODMS not protected by the resist was removed by O₂ plasma treatment (30 s), and then the resist was removed by acetone. Thus, a hydrophilic micropatterned substrate (ODMS-SiO₂ substrate) was produced (FIG 6).

### Example 6 Measurement of a contact angle before and after the rHSA adsorbed to the ODMS substrate

The contact angle of pure water with respect to the micropatterned ODMS-SiO₂ substrate produced in Example 5 was 83±1°. The contact angle was not changed after the substrate was immersed in an rHSA solution (pH 7.4, 100 µg/mL) (Table 1). When the substrate was immersed in an rHSA solution (pH 5.0), the contact angle was significantly decreased to 67±1°. This is considered to have occurred because the repulsion of charges was lowered at and around the isoelectric point of rHSA (p*I* = 4.9) and the adsorption of the rHSA to the ODMS substrate by hydrophobic interaction was promoted (FIG 6). Also, the water-soluble rHSA adsorbed to the hydrophobic ODMS areas of the substrate, and thus the hydrophilicity of the surface of the substrate was increased. In addition, since the contact angle was increased back to that before the rHSA adsorption by the addition of an aqueous solution of C₁₂E₁₀, it was confirmed that the rHSA, which once adsorbed, was exfoliated (FIG 6).

**Table 1 Contact angle with respect to the ODMS plate before and after the rHSA adsorption**

| rHSA adsorption | | Contact angle (°) |
|---|---|---|
| Before adsorption | | 83±1 |
| After adsorption | pH7.4 | 80±2 |
| | pH5.0 | 67±1 |
| ¹⁾C₁₂E₁₀ | | 82±1 |

| | | |
|---|---|---|
| 1) C₁₂E₁₀ was added to the plate after the rHSA adsorbed (pH5.0). | | |

### Example 7 Observation of the rHSA adsorbing to the ODMS-SiO₂ substrate with a fluorescent microscope

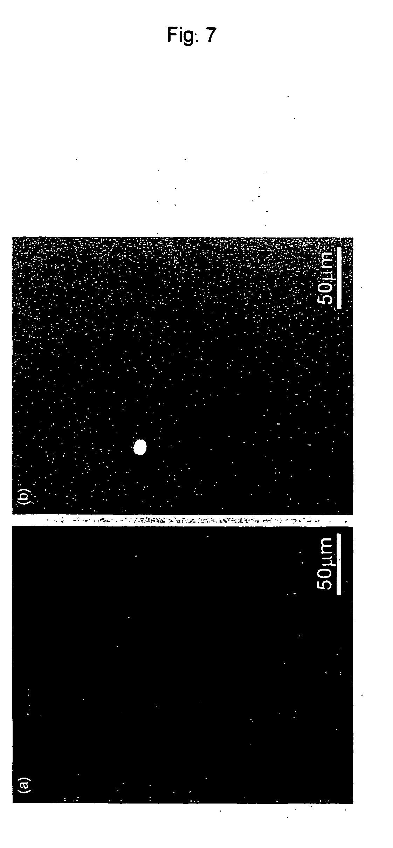

The micropatterned ODMS-SiO₂ substrate obtained in Example 6 was immersed (room temperature, 1 hour) in rhodamine labeled rHSA (1 µg/mL) and then observed with a fluorescent microscope. Only the ODMS area emitted fluorescent light, and thus the selective adsorption of rhodamine labeled rHSA was confirmed (FIG. 7(a)). The fluorescent light was not observed after an aqueous solution of C₁₂E₁₀ was added (FIG 7(b)). From this, it was confirmed that the rHSA selectively adsorbed to the ODMS areas of the micropatterned ODMS-SiO₂ substrate and was exfoliated by the aqueous solution of C₁₂E₁₀.

### Example 8 Production of an rHSA sheet on the ODMS-SiO₂ substrate

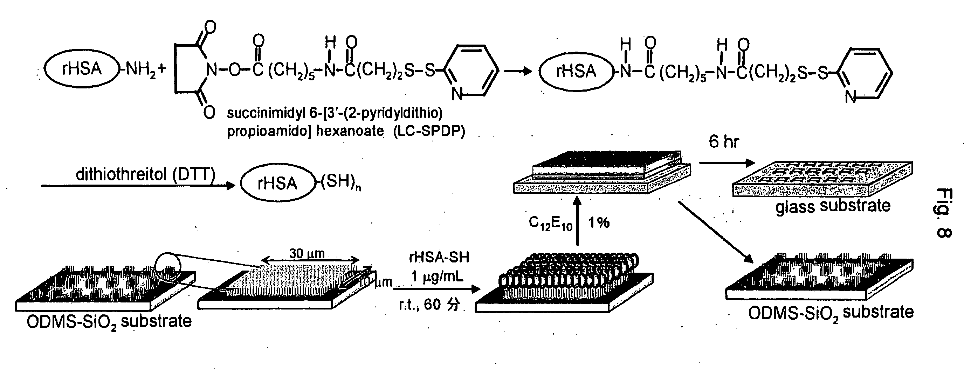

To the rHSA, LC-SPDP (succinimidyl 6-[3'-(2-pyridyldithio)propionamido] hexanoate) (10 equivalent) was added as a crosslinker (room temperature, 20 minutes), and the resultant substance was purified by GPC (gel permeation chromatography), thereby obtaining PD (pyridyldisulfide)-rHSA. Next, the PD group was reduced by dithiothreitol. Based on the freed 2-thiopyridone (2TP, ε = 8.1 × 10³ M⁻¹cm⁻¹, 343 nm), it was confirmed that 7.4±1.2 molecules of PD group were bonded to one moledule of rHSA. After purification by GPC, rHSA-SH was obtained. The micropatterned ODMS-SiO₂ substrate (produced in Example 6) was immersed in rhodamine labeled rHSA-SH (room temperature, 1 hour). After the non-adsorbing rHSA-SH was removed, the resultant substrate was immersed in an acetic acid buffer solution ([Cu²⁺] = 100 µM, room temperature, 12 hours), thereby crosslinking the adsorbing rHSA-SH using disulfide. Thus, a thin film polymer structure was obtained on the micropatterned ODMS-SiO₂ substrate (FIG. 8).

### Example 9 Observation of a thin film polymer structure of rHSA produced on the ODMS-SiO₂ substrate with a fluorescent microscope

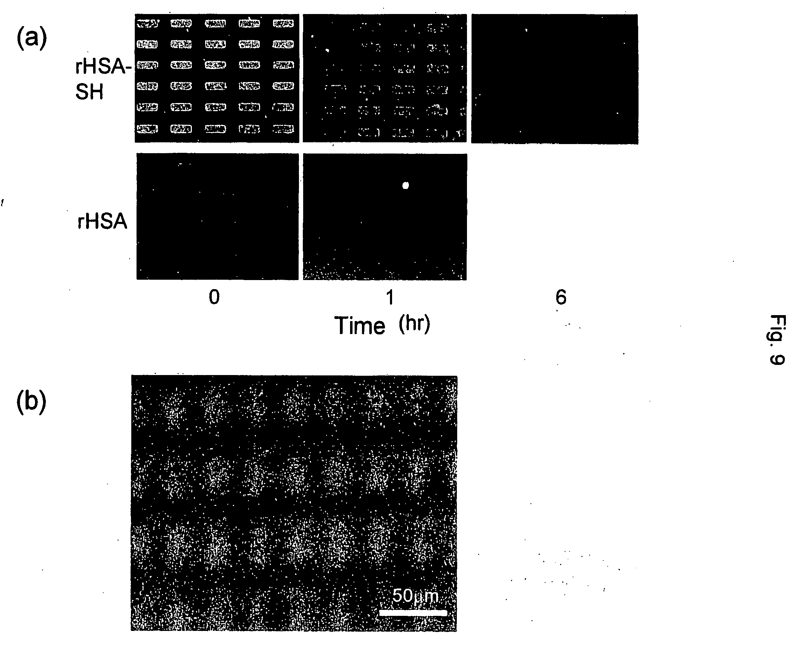

The micropatterned ODMS-SiO₂ substrate having the thin film formed thereon produced in Example 8 was observed with a fluorescent microscope. Only the ODMS area emitted fluorescent light, and thus the selective adsorption of rHSA-SH was confirmed. When the above-mentioned substrate was immersed in an aqueous solution of C₁₂E₁₀ (in a condition capable of exfoliating the rHSA from the substrate) (room temperature, 1 hour), the rHSA-SH was not exfoliated and stayed on the substrate. After 6 hours of immersion, the rHSA-SH was finally exfoliated (FIG. 8, FIG. 9(a)). This is considered to have occurred for the following reason. Since the thin film polymer structure was formed by progression of the disulfide crosslinking of the thiol group of the rHSA-SH owing to automatic oxidation, it took longer to exfoliate the structure by C₁₂E₁₀ as the surfactant than in the case where the adsorbing rHSA was exfoliated.

The thin film polymer structure was exfoliated and carefully transferred onto a cover glass plate (room temperature, 6 hours) and observed with a fluorescent microscope. A sheet-like shape substantially the same as that observed on the ODMS-SiO₂ substrate was observed (FIG. 9(b)). It is considered that the microphotograph was defocused because the sheet was curved in the liquid phase.

### Example 10 Preparation of latex beads covered with rHSA (rHSA-covered LB, (rHSA)LB)

LB (φ200 nm) was dispersed in an rHSA solution (20 mg/mL, 1 mL) and shaken (room temperature, 2 hours), thereby causing the rHSA to physically adsorb to the surface of the LB. The dispersion was ultracentrifuged (20000 rpm, 10 minutes, 4°C, twice) to remove the non-adsorbing rHSA. Then, the LB was re-dispersed in PBS (pH 7.4), thereby obtaining rHSA-covered LB ((rHSA)LB, 1 × 10 particles/µL).

The amount of the rHSA adsorbing to the surface of the (rHSA)LB (1 × 10⁹ particles/µL, 10 µL) was 10.8 µg/mL, and was calculated to be 7.8 × 10³ molecules/particle. This is substantially equivalent to the theoretical value (4.9 × 10³ molecules/particle, calculated from the average surface area of rHSA). It was confirmed that the LB surface was sufficiently covered with the rHSA.

### Example 11 Measurement of a contact angle before and after the rHSA-covered LB adsorbed to the ODMS substrate

A dispersion of rHSA-covered LB (1 × 10⁸ particles/µL) was dispersed in an acetic acid buffer solution (pH 5.0), and the ODMS substrate was immersed therein. As in the case of the rHSA solution, the contact angle was decreased, and was increased back to the angle before the immersion by the addition of an aqueous solution of C₁₂E₁₀ (Table 2). It was suggested that as in the case of the rHSA, the rHSA-covered LB adsorbed to the hydrophobic ODMS areas of the micropatterned ODMS-SiO₂ substrate. It was made clear that the adsorbing rHSA-covered LB was allowed to be detached.

**Table 2 Contact angle with respect to the ODMS substrate before and after the rHSA-covered LB adsorption**

| rHSA adsorption | Contact angle (°) |
|---|---|
| Before adsorption | 83±1 |
| After adsorption | 73±3 |
| C₁₂E₁₀ | 82±6 |

### Example 12 Direct observation of adsorption and exfoliation of the rHSA-covered LB to and from the ODMS-SiO₂ substrate

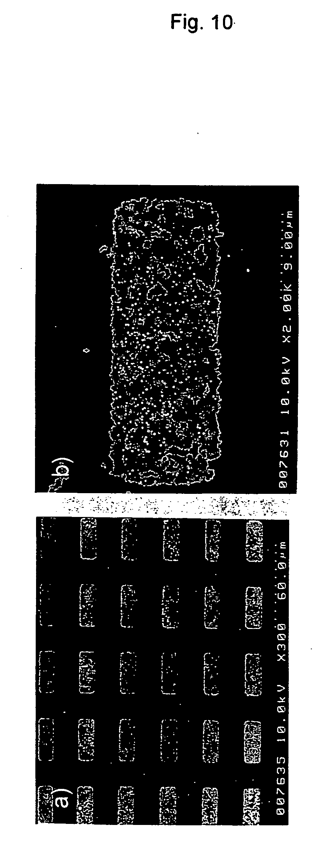

An operation of slowly deriving the ODMS-SiO₂ substrate (Example 6) from a dispersion of rHSA-covered LB (1 × 10⁸ particles/µL, pH 5.0) was repeated several times within a short time, thereby causing the rHSA to adsorb to the substrate. The substrate was washed with superpure water and dried, and then was observed with a scanning electron microscope. The selective adsorption of the rHSA-covered LB to the hydrophobic ODMS areas of the ODMS-SiO₂ substrate was confirmed (FIG. 10(a)). Almost all the LB particles concentrated densely in the areas and point-contacted to each other (FIG. 10(b)). It is considered that selective adsorption is more efficiently realized by deriving the ODMS-SiO₂ substrate using surface tension at a gas-liquid interface than by putting ODMS and (rHSA)LB into contact with each other in a liquid for a long time. The substrate having the rHSA-covered LB adsorbing thereto was shaken in an aqueous solution of C₁₂E₁₀ (room temperature, 1 hour). Selective desorption from the ODMS areas was confirmed (optical microscope).

### Example 13 Fusion by heating of (rHSA)LB on the ODMS-SiO₂ substrate

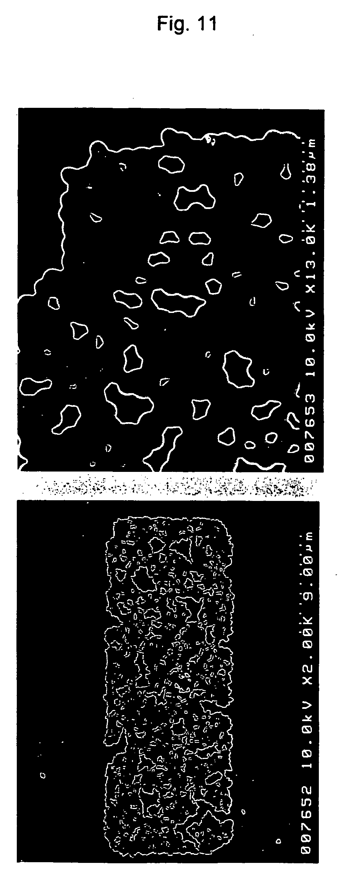

The LB(poly(styrene-co-divinylbenzene)) was measured with DSC (differential scanning calorimeter). The result was Tₘ = 109.9°C. The fusion temperature of (rHSA)LB by heating was set to 110°C. The (rHSA)LB was caused to adsorb to the ODMS-SiO₂ substrate in the conditions of Example 12, and the heating time was checked. In 30 seconds, the LB particles were fused with the adjacent LB particles while being kept in the particle state (FIG 11). Thus, it was confirmed that a thin film polymer structure was formed from the rHSA-covered LB by physical crosslinking or fusion caused by heating.

### INDUSTRIAL APPLICABILITY

The present invention provides a thin film polymer structure of an arbitrary shape and a method for preparing the same. The structure according to the present invention, when bonded with a target labeling site or the like, becomes usable as a functional carrier or a platelet substitute in a drug delivery system.

## Claims

1. A method for preparing a thin film polymer structure comprising a functional substance on one surface of the film, comprising the steps of:
(a) causing polyfunctional molecules to adsorb to an area of an arbitrary shape in an interface between a substrate body and a liquid phase;
(b) polymerizing and/or crosslinking the adsorbing polyfunctional molecules to form a polymer thin film; and
(c) bonding a functional substance to the formed thin film and then exfoliating the formed thin film from the substrate body.

2. A method for preparing a thin film polymer structure comprising a functional substance on one surface of the film, the method comprising the steps of:
(a) bonding polyfunctional molecules to which the functional substance is bonded, to an area of an arbitrary shape in an interface between a substrate body and a liquid phase the area including a substance recognizing the functional substance;
(b) polymerizing and/or crosslinking the bonded polyfunctional molecules to form a polymer thin film; and
(c) exfoliating the formed thin film from the substrate body.

3. A method for preparing a thin film polymer structure comprising a functional substance on one surface of the film and comprising arbitrary modification on the other surface of the film, the method comprising the steps of:
(a) bonding the functional substance on the one surface of the thin film polymer structure obtained according to the method of claim 1 or 2 to a substance which is solidified on an area of an arbitrary shape in an interface between a substrate body and a liquid phase and which recognizes the functional substance;
(b) providing the arbitrary modification on the other surface of the structure; and
(c) exfoliating the modified thin film from the substrate body.

4. A method according to any one of claims 1 through 3, wherein the step of polymerizing and/or crosslinking the polyfunctional molecules further comprises the step of laminating polyelectrolytes having opposite charges to each other alternately to crosslink the polyelectrolytes in terms of charges.

5. A method according to any one of claims 1 through 4, wherein the polyfunctional molecules are of a polyfunctional monomer and/or a polyfunctional macromer.

6. A method according to claim 5, wherein the polyfunctional macromer is a protein.

7. A method according to claim 5, wherein the polyfunctional macromer is a polyelectrolyte.

8. A method according to claim 5, wherein the polyfunctional macromer is a polymer bead.

9. A method according to any one of claims 1 through 4, wherein the polyfunctional macromers are crosslinked by physical crosslinking or fusion.

10. A method according to claim 9, wherein the physical crosslinking is realized by thermal denaturing or thermal plasticization.

11. A method according to claim 3, wherein the modification is provided by a polymer compound, a protein, a peptide, a sugar chain and/or biotin derivative.

12. A method according to claim 11, wherein the polymer compound comprises poly(ethyleneglycol).

13. A method according to any one of claims 1 through 3, wherein the area has a structure of a self-assembled monolayer or a self-assembled bilayer.

14. A method according to claim 13, wherein the self-assembled monolayer is formed of linear hydrophobic molecules comprising, at a terminus, an SH group, a chloroalkylsilyl group, an alkoxyalkylsilyl group, or a vinyl group.

15. A method according to claim 13, wherein the self-assembled bilayer comprises at least one selected from the group consisting of phospholipid, amino acid-based lipid, sugar lipid, and cationic lipid.

16. A method according to claim 1, wherein the area is modified with a temperature-responsive polymer and the exfoliation is caused by a temperature decrease.

17. A method according to any one of claims 1 through 3, wherein the substrate body is entirely or partially formed of a metal or an oxide cover layer thereof, silicon, silica, or glass.

18. A method according to claim 1, wherein the exfoliation is caused by treatment with a surfactant or an organic solvent.

19. A method according to claim 2 or claim 3, wherein the exfoliation is caused by addition of an aqueous solution comprising a compound which Is competitive against the functional substance.

20. A method according to any preceding claim further comprising the step of:
(d) dispersing the thin film polymer In liquid.

## Patentansprüche

1. Verfahren zur Herstellung einer dünnschichtigen Polymerstruktur, die eine funktionelle Substanz auf einer Oberfläche der Schicht aufweist, das folgende Schritte umfasst:
(a) Verursachen, dass die polyfunktionellen Moleküle an einen Bereich mit einer beliebigen Form an einer Grenzfläche zwischen einem Substratkörper und einer flüssigen Phase adsorbieren;
(b) Polymerisieren und/oder Vernetzen der adsorbierenden polyfunktionellen Moleküle, um eine dünne Polymerschicht zu bilden; und
(c) Binden einer funktionellen Substanz an die gebildete dünne Schicht und dann Abschälen der gebildeten dünnen Schicht von dem Substratkörper.

2. Verfahren zur Herstellung einer dünnschichtigen Polymerstruktur, die eine funktionelle Substanz auf einer Oberfläche der Schicht umfasst, wobei das Verfahren folgende Schritte umfasst:
(a) Binden von polyfunktionellen Molekülen, an welche die funktionelle Substanz gebunden ist, an einen Bereich mit einer beliebigen Form an einer Grenzfläche zwischen einem Substratkörper und einer flüssigen Phase, wobei der Bereich eine Substanz umfasst, welche die funktionelle Substanz erkennt;
(b) Polymerisieren und/oder Vernetzen der gebundenen polyfunktionellen Moleküle, um eine dünne Polymerschicht zu bilden; und
(c) Abschälen der gebildeten dünnen Schicht von dem Substratkörper.

3. Verfahren zur Herstellung einer dünnschichtigen Polymerstruktur, die eine funktionelle Substanz auf einer Oberfläche der Schicht umfasst und die eine beliebige Modifikation auf der anderen Oberfläche der Schicht umfasst, wobei das Verfahren folgende Schritte umfasst:
(a) Binden der funktionellen Substanz auf der einen Oberfläche der dünnschichtigen Polymerstruktur, die gemäß dem Verfahren nach Anspruch 1 oder 2 erhalten wurde, an eine Substanz, die auf einem Bereich mit beliebiger Form an einer Grenzfläche zwischen einem Substratkörper und einer flüssigen Phase verfestigt wurde und welche die funktionelle Substanz erkennt;
(b) Bereitstellen der beliebigen Modifikation auf der anderen Oberfläche der Struktur; und
(c) Abschälen des modifizierten dünnen Films von dem Substratkörper.

4. Verfahren nach einem der Ansprüche 1 bis 3, worin der Schritt des Polymerisierens und/oder Vernetzens der polyfunktionellen Moleküle weiters den Schritt des Laminierens von Polyelektrolyten umfasst, welche zueinander abwechselnd entgegengesetzte Ladungen aufweisen, um die Polyelektrolyten hinsichtlich der Ladungen miteinander zu vernetzen.

5. Verfahren nach einem der Ansprüche 1 bis 4, worin die polyfunktionellen Moleküle aus einem polyfunktionellen Monomer und/oder einem polyfunktionellen Makromer bestehen.

6. Verfahren nach Anspruch 5, worin das polyfunktionelle Makromer ein Protein ist.

7. Verfahren nach Anspruch 5, worin das polyfunktionelle Makromer ein Polyelektrolyt ist.

8. Verfahren nach Anspruch 5, worin das polyfunktionelle Makromer ein Polymerkügelchen ist.

9. Verfahren nach einem der Ansprüche 1 bis 4, worin die polyfunktionellen Makromere mittels physikalischer Vernetzung oder Fusion vernetzt sind.

10. Verfahren nach Anspruch 9, worin die physikalische Vernetzung mittels thermischer Denaturierung oder thermischer Plastifizierung durchgeführt wird.

11. Verfahren nach Anspruch 3, worin die Modifikation durch eine Polymerverbindung, ein Protein, ein Peptid, eine Zuckerkette und/oder ein Biotinderivat bereitgestellt wird.

12. Verfahren nach Anspruch 11, worin die Polymerverbindung Poly(ethylenglykol) umfasst.

13. Verfahren nach einem der Ansprüche 1 bis 3, worin der Bereich eine Struktur aus selbstassemblierter Monoschicht oder aus selbstassemblierter Doppelschicht aufweist.

14. Verfahren nach Anspruch 13, worin die selbstassemblierte Monoschicht aus linearen hydrophoben Molekülen gebildet ist, die an einem Ende eine SH-Gruppe, eine Chloralkylsilylgruppe, eine Alkoxyalkylsilylgruppe oder eine Vinylgruppe umfassen.

15. Verfahren nach Anspruch 13, worin die selbstassemblierte Doppelschicht zumindest ein Molekül umfasst, das aus der aus Phospholipid, Aminosäure-basiertem Lipid, Zuckerlipid und kationischem Lipid bestehenden Gruppe ausgewählt ist.

16. Verfahren nach Anspruch 1, worin der Bereich mit einem auf Temperatur reagierenden Polymer modifiziert ist und das Abschälen durch einen Temperaturabfall verursacht wird.

17. Verfahren nach einem der Ansprüche 1 bis 3, worin der Substratkörper vollständig oder teilweise aus einem Metall oder einer Oxiddeckschicht davon, Silicium, Silica oder Glas gebildet ist.

18. Verfahren nach Anspruch 1, worin das Abschälen durch die Behandlung mit einem Tensid oder einem organischen Lösungsmittel verursacht wird.

19. Verfahren nach Anspruch 2 oder Anspruch 3, worin das Abschälen durch Zusatz einer wässrigen Lösung verursacht wird, die eine Verbindung umfasst, die gegen die funktionelle Substanz kompetitiv ist.

20. Verfahren nach einem der vorangegangenen Ansprüche, welches weiters den folgenden Schritt umfasst:
(d) Dispergieren der dünnen Polymerschicht in Flüssigkeit.

## Revendications

1. Procédé de préparation d'une structure polymère pelliculaire fine comprenant une substance fonctionnelle sur une surface du film, comprenant les étapes de:
(a) amener des molécules polyfonctionnelles à adsorber à une zone d'une forme arbitraire dans une interface entre un corps de substrat et une phase liquide;
(b) polymériser et/ou réticuler les molécules polyfonctionnelles adsorbantes pour former un film mince en polymère; et
(c) lier une substance fonctionnelle au film mince formé et exfolier ensuite le film mince formé du corps de substrat.

2. Procédé de préparation d'une structure polymère pelliculaire fine comprenant une substance fonctionnelle sur une surface du film, le procédé comprenant les étapes de:
(a) lier des molécules polyfonctionnelles, auxquelles la substance fonctionnelle est liée, à une zone d'une forme arbitraire dans une interface entre un corps de substrat et une phase liquide, la zone incluant une substance reconnaissant la substance fonctionnelle;
(b) polymériser et/ou réticuler les molécules polyfonctionnelles liées pour former un film mince en polymère; et
(c) exfolier le film mince formé du corps de substrat.

3. Procédé de préparation d'une structure polymère pelliculaire fine comprenant une substance fonctionnelle sur une surface du film et comprenant une modification arbitraire sur l'autre surface du film, le procédé comprenant les étapes de:
(a) lier la substance fonctionnelle à une surface précitée de la structure polymère de film mince obtenue selon le procédé de la revendication 1 ou 2 à une substance qui est solidifiée sur une zone d'une forme arbitraire dans une interface entre un corps de substrat et une phase liquide et qui reconnaît la substance fonctionnelle;
(b) réaliser la modification arbitraire sur l'autre surface de la structure; et
(c) exfolier le film mince modifié du corps de substrat.

4. Procédé selon l'une quelconque des revendications 1 à 3, dans lequel l'étape de polymérisation et/ou de réticulation des molécules polyfonctionnelles comprend en outre l'étape consistant à laminer des polyélectrolytes ayant des charges opposées les uns aux autres alternativement pour réticuler les polyélectrolytes en termes de charges.

5. Procédé selon l'une quelconque des revendications 1 à 4, dans lequel les molécules polyfonctionnelles sont d'un monomère polyfonctionnel et/ou d'un macromère polyfonctionnel.

6. Procédé selon la revendication 5, dans lequel le macromère polyfonctionnel est une protéine.

7. Procédé selon la revendication 5, dans lequel le macromère polyfonctionnel est un polyélectrolyte.

8. Procédé selon la revendication 5, dans lequel le macromère polyfonctionnel est une perle de polymère.

9. Procédé selon l'une quelconque des revendications 1 à 4, dans lequel les macromères polyfonctionnels sont réticulés par réticulation ou fusion physique.

10. Procédé selon la revendication 9, dans lequel la réticulation physique est réalisée par une dénaturation thermique ou une plastification thermique.

11. Procédé selon la revendication 3, dans lequel la modification est réalisée par un composé polymère, une protéine, un peptide, une chaîne de sucre et/ou un dérivé de biotine.

12. Procédé selon la revendication 11, dans lequel le composé polymère comprend du poly(éthylèneglycol).

13. Procédé selon l'une quelconque des revendications 1 à 3, dans lequel la zone a une structure d'une monocouche auto-assemblée ou d'une bicouche auto-assemblée.

14. Procédé selon la revendication 13, dans lequel la monocouche auto-assemblée est formée par des molécules hydrophobes linéaires comprenant, à un terminus, un groupe SH, un groupe chloroalkylsilyle, un groupe alcoxyalkylsilyle ou un groupe vinyle.

15. Procédé selon la revendication 13, dans lequel la bi-couche auto-assemblée comprend au moins un sélectionné dans le groupe consistant en phospholipide, lipide à base d'acide aminé, lipide de sucre et lipide cationique.

16. Procédé selon la revendication 1, dans lequel la zone est modifiée avec un polymère réagissant à la température, et l'exfoliation est provoquée par une diminution de la température.

17. Procédé selon l'une quelconque des revendications 1 à 3, dans lequel le corps de substrat est entièrement ou partiellement réalisé en un métal ou une couche de recouvrement d'oxyde de celui-ci, silicium, silice ou verre.

18. Procédé selon la revendication 1, dans lequel l'exfoliation est provoquée par un traitement avec un agent de surface ou un solvant organique.

19. Procédé selon la revendication 2 ou la revendication 3, dans lequel l'exfoliation est provoquée par l'addition d'une solution aqueuse comprenant un composé qui est compétitif contre la substance fonctionnelle.

20. Procédé selon l'une quelconque des revendications précédentes, comprenant en outre l'étape de:
(d) disperser le polymère de film mince dans du liquide.
